(19) Europäisches Patentamt / European Patent Office / Office européen des brevets

(11) **EP 3 776 702 B1**

(12) **EUROPEAN PATENT SPECIFICATION**

(45) Date of publication and mention of the grant of the patent:
**08.05.2024 Bulletin 2024/19**

(21) Application number: **19721782.1**

(22) Date of filing: **27.03.2019**

(51) International Patent Classification (IPC):
$H01M\ 8/10$ (2016.01)   $H01M\ 4/86$ (2006.01)
$H01M\ 4/88$ (2006.01)   $H01M\ 4/90$ (2006.01)

(52) Cooperative Patent Classification (CPC):
**H01M 4/8657; H01M 4/8825; H01M 4/8889; H01M 4/9041; H01M 4/9075;** H01M 2008/1095; Y02E 60/50

(86) International application number:
**PCT/IB2019/052496**

(87) International publication number:
**WO 2019/193458 (10.10.2019 Gazette 2019/41)**

(54) **CATALYST COMPRISING PT, NI, AND TA**

KATALYSATOR MIT PT, NI UND TA

CATALYSEUR COMPRENANT DU PT, NI ET TA

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.04.2018 US 201862652607 P**

(43) Date of publication of application:
**17.02.2021 Bulletin 2021/07**

(73) Proprietor: **3M Innovative Properties Company**
Saint Paul, Minnesota 55133-3427 (US)

(72) Inventors:
• **STEINBACH, Andrew J. L.**
  **Saint Paul, Minnesota 55133-3427 (US)**
• **LEWINSKI, Krzysztof A.**
  **Saint Paul, Minnesota 55133-3427 (US)**
• **HAUG, Andrew T.**
  **Saint Paul, Minnesota 55133-3427 (US)**
• **HESTER, Amy E.**
  **Saint Paul, Minnesota 55133-3427 (US)**
• **LUOPA, Sean M.**
  **Saint Paul, Minnesota 55133-3427 (US)**
• **THOMA, Grant M.**
  **Saint Paul, Minnesota 55133-3427 (US)**

(74) Representative: **Mathys & Squire**
**Theatinerstraße 7**
**80333 München (DE)**

(56) References cited:
**WO-A1-2008/025750     WO-A1-2013/055533**

• **MANI P ET AL: "Dealloyed binary PtM3 (M=Cu, Co, Ni) and ternary PtNi3M (M=Cu, Co, Fe, Cr) electrocatalysts for the oxygen reduction reaction: Performance in polymer electrolyte membrane fuel cells", JOURNAL OF POWER SOURCES, ELSEVIER SA, CH, vol. 196, no. 2, 15 January 2011 (2011-01-15), pages 666-673, XP027288902, ISSN: 0378-7753 [retrieved on 2010-07-27]**
• **WOO J Y ET AL: "Electrocatalytic characteristics of Pt-Ru-Co and Pt-Ru-Ni based on covalently cross-linked sulfonated poly(ether ether ketone)/heteropolyacids composite membranes for water electrolysis", JOURNAL OF INDUSTRIAL AND ENGINEERING CHEMISTRY, THE KOREAN SOCIETY OF INDUSTRIAL AND ENGINEERING CHEMISTRY, KOREA, vol. 16, no. 5, 25 September 2010 (2010-09-25), pages 688-697, XP027229102, ISSN: 1226-086X [retrieved on 2010-08-08]**

**Description**

<u>**Cross Reference To Related Application**</u>

This application claims the benefit of U.S. Provisional Patent Application Number 62/652607, filed April 4, 2018.
This invention was made with Government support under Contract No. DE-EE0007270 awarded by DOE. The Government has certain rights in this invention.

**Background**

Fuel cells produce electricity via electrochemical oxidation of a fuel and reduction of an oxidant. Fuel cells are generally classified by the type of electrolyte and the type of fuel and oxidant reactants. One type of fuel cell is a polymer electrolyte membrane fuel cell (PEMFC), where the electrolyte is a polymeric ion conductor and the reactants are hydrogen fuel and oxygen as the oxidant. The oxygen is often provided from the ambient air.
PEMFCs typically require the use of electrocatalysts to improve the reaction rate of the hydrogen oxidation reaction (HOR) and oxygen reduction reactions (ORR), which improve the PEMFC performance. PEMFC electrocatalysts often comprise platinum, a relatively expensive precious metal. It is typically desirable to minimize the platinum content in PEMFC increasing the catalyst activity per unit catalyst surface area (specific activity) and increasing the catalyst surface area per catalyst mass (specific surface area or specific area). The HOR and ORR occur on the catalyst surface, so increasing the specific surface area and/or the specific activity can reduce the devices to minimize cost. Sufficient platinum content, however, is needed to provide sufficient catalytic activity and PEMFC device performance. As such, there is a desire to increase the catalyst activity per unit catalyst mass (mass activity). There are two general approaches to increase the mass activity, namely amount of catalyst needed to achieve a desired absolute performance, reducing cost.
To maximize specific area, PEMFC electrocatalysts are often in the form of nanometer-scale thin films or particles on support materials. An exemplary support material for nanoparticle PEMFC electrocatalysts is carbon black, and an exemplary support material for thin film electrocatalysts is whiskers.
To increase the specific activity, PEMFC Pt ORR electrocatalysts often also comprise certain transition metals such as cobalt or nickel. Without being bound by theory, incorporation of certain transition metals into the Pt lattice is believed to induce contraction of the Pt atoms at the catalyst surface, which increases the kinetic reaction rate by modification of the molecular oxygen binding and dissociation energies and the binding energies of reaction intermediates and/or spectator species.
PEMFC electrocatalysts may incorporate other precious metals. For example, HOR PEMFC Pt electrocatalysts can be alloyed with ruthenium to improve tolerance to carbon monoxide, a known Pt catalyst poison. HOR and ORR PEMFC electrocatalysts may also incorporate iridium to facilitate improved activity for the oxygen evolution reaction (OER). Improved OER activity may improve the durability of the PEMFC under inadvertent operation in the absence of fuel and during PEMFC system startup and shutdown. Incorporation of iridium into the PEMFC ORR electrocatalyst, however, may result in decreased mass activity and higher catalyst cost. Iridium has relatively lower specific activity for ORR than platinum, potentially resulting in decreased mass activity. Iridium is also a precious metal, and thereby its incorporation can increase cost. PEMFC Pt electrocatalysts may also incorporate gold which is also a precious metal and can increase cost. Gold is known to be relatively inactive for HOR and ORR in acidic electrolytes. Incorporation of gold can result in substantial deactivation for HOR and ORR due to the propensity for gold to preferentially segregate to the electrocatalyst surface, blocking active catalytic sites.
PEMFC electrocatalysts may have different structural and compositional morphologies. The structural and compositional morphologies are often tailored through specific processing methods during the electrocatalyst fabrication, such as variations in the electrocatalyst deposition method and annealing methods. PEMFC electrocatalysts can be compositionally homogenous, compositionally layered, or may contain composition gradients throughout the electrocatalyst. Tailoring of composition profiles within the electrocatalyst may improve the activity and durability of electrocatalysts. PEMFC electrocatalyst particles or nanometer-scale films may have substantially smooth surfaces or have atomic or nanometer scale roughness. PEMFC electrocatalysts may be structurally homogenous or may be nanoporous, being comprised of nanometer-scale pores and solid catalyst ligaments.
As compared to structurally homogenous electrocatalysts, nanoporous PEMFC electrocatalysts may have higher specific area, thereby reducing cost. Nanoporous catalysts are comprised of numerous interconnected nanoscale catalyst ligaments, and the surface area of a nanoporous material depends upon the diameter and volumetric number density of the nanoscale ligaments. Surface area is expected to increase as the nanoscale ligaments diameter decreases and the volumetric number density increases. In PEMFC devices, electrocatalysts may lose performance over time due to a variety of degradation mechanisms, which induce structural and compositional changes. Such performance loss may shorten the practical lifetime of such systems. Electrocatalyst degradation may occur, for example, due to loss of electrocatalyst activity per unit surface area and loss of electrocatalyst surface area. Electrocatalyst specific activity may be lost, for example, due to the dissolution of electrocatalyst alloying elements. Nanoparticle and nano-scale thin film electrocatalysts may lose surface area, for example, due to Pt dissolution, particle sintering, and loss of surface roughness. Nanoporous electrocatalysts may additionally lose surface area, for example, due to increased nanoscale ligament diameter and decreased nanoscale ligament density.

Additional electrocatalysts and systems containing such catalysts are desired, including those that address one or more of the issues discussed above.

## Summary

In one aspect, the present disclosure provides a catalyst comprising nanostructured elements comprising microstructured whiskers having an outer surface at least partially covered by a catalyst material comprising Pt, Ni, and Ta, wherein the Pt is present in a range from 35.2 to 35.6 atomic percent, the Ni is present in a range from 62.9 to 63.6 atomic percent, and the Ta is present in a range from 0.78 to 1.8 atomic percent, and wherein the total atomic percent of Pt, Ni, and Ta equals 100.

In some embodiments, the catalyst material functions as an oxygen reduction catalyst material.

In some embodiments, catalysts described herein have been annealed.

Surprisingly, Applicants discovered the addition of tantalum to PtNi catalyst can substantially improve retention of mass activity, specific area, and/or performance after accelerated electrocatalyst aging. Tantalum was observed to improve the durability when incorporated at the surface of the catalyst prior to annealing.

Catalysts described herein are useful, for example, in fuel cell membrane electrode assemblies.

## Brief Description of Drawings

FIG. 1 is a side view of an exemplary catalyst described herein.

FIG. 2 is a schematic of an exemplary fuel cell.

FIG. 3 is a plot of the electrocatalyst tantalum content of Examples 2, 4, and 6.

FIG. 4 is a plot of the electrocatalyst mass activity of Examples 1-6 and the Comparative Example catalysts, normalized to platinum content.

FIG. 5 is a plot of the electrocatalyst surface area of Examples 1-6 and the Comparative Example catalysts, normalized to platinum content.

FIG. 6 is a plot of the electrocatalyst specific activity of Examples 1-6 and the Comparative Example catalysts, normalized to Pt surface area.

## Detailed Description

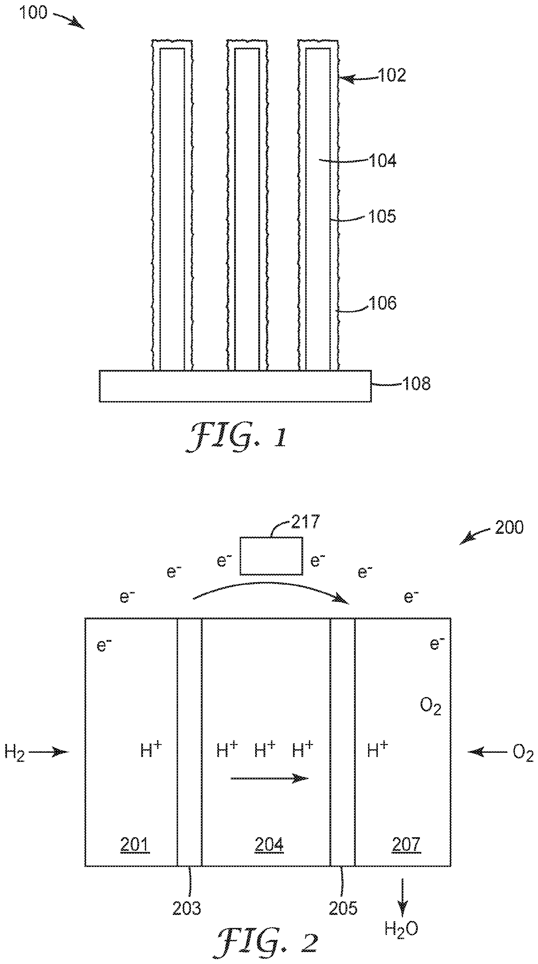

Referring to FIG. 1, exemplary catalyst described herein 100 on substrate 108 has nanostructured elements 102 with microstructured whiskers 104 having outer surface 105 at least partially covered by catalyst material 106 comprising at least 90 atomic percent collectively Pt, Ni, and Ta, wherein the Pt is present in a range from 35.2 to 35.6 atomic percent, the Ni is present in a range from 62.9 to 63.6 atomic percent, and the Ta is present in a range from 0.78 to 1.8 atomic percent, and wherein the total atomic percent of Pt, Ni, and Ta equals 100.

Suitable whiskers can be provided by techniques known in the art, including those described in U.S. Pat. Nos. 4,812,352 (Debe), 5,039,561 (Debe), 5,338,430 (Parsonage et al.), 6,136,412 (Spiewak et al.), and 7,419,741 (Vernstrom et al.). In general, microstructured whiskers can be provided, for example, by vacuum depositing (e.g., by sublimation) a layer of organic or inorganic material onto a substrate (e.g., a microstructured catalyst transfer polymer sheet), and then, in the case of perylene red deposition, converting the perylene red pigment into microstructured whiskers by thermal annealing. Typically, the vacuum deposition steps are carried out at total pressures at or below about $10^{-3}$ Torr or 0.1 Pascal. Exemplary microstructures are made by thermal sublimation and vacuum annealing of the organic pigment C.I. Pigment Red 149 (i.e., N,N'-di(3,5-xylyl)perylene-3,4:9,10-bis(dicarboximide)). Methods for making organic microstructured layers are reported, for example, in Materials Science and Engineering, A158 (1992), pp. 1-6; J. Vac. Sci. Technol. A, 5, (4), July/August 1987, pp. 1914-16; J. Vac. Sci. Technol. A, 6, (3), May/August 1988, pp. 1907-11; Thin Solid Films, 186, 1990, pp. 327-47; J. Mat. Sci., 25, 1990, pp. 5257-68; Rapidly Quenched Metals, Proc. of the Fifth Int. Conf. on Rapidly Quenched Metals, Wurzburg, Germany (Sep. 3-7, 1984), S. Steeb et al., eds., Elsevier Science Publishers B.V., New York, (1985), pp. 1117-24; Photo. Sci. and Eng., 24, (4), July/August 1980, pp. 211-16; and U.S. Pat. Nos. 4,340,276 (Maffitt et al.) and 4,568,598 (Bilkadi et al.). Properties of catalyst layers using carbon nanotube arrays are reported in the article "High Dispersion and Electrocatalytic Properties of Platinum on Well-Aligned Carbon Nanotube Arrays", Carbon, 42, (2004), pp. 191-197. Properties of catalyst layers using grassy or bristled silicon are reported, for example, in U.S. Pat. App. Pub. No. 2004/0048466 A1 (Gore et al.).

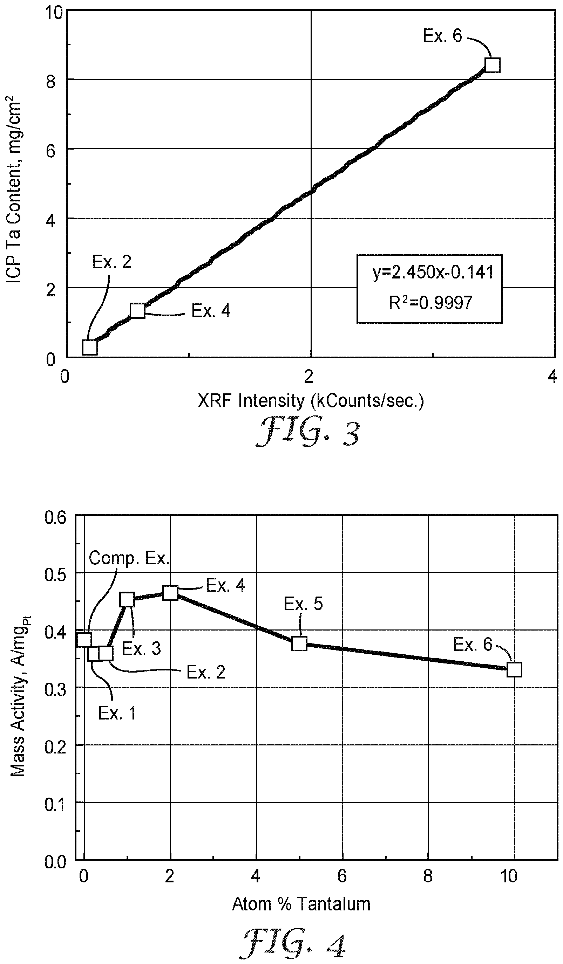

Vacuum deposition may be carried out in any suitable apparatus (see, e.g., U.S. Pat. Nos. 5,338,430 (Parsonage et al.), 5,879,827 (Debe et al.), 5,879,828 (Debe et al.), 6,040,077 (Debe et al.), and 6,319,293 (Debe et al.), and U.S. Pat. App. Pub. No. 2002/0004453 A1 (Haugen et al.)). One exemplary apparatus is depicted schematically in FIG. 4A of U.S. Pat. No. 5,338,430 (Parsonage et al.), and discussed in the accompanying text, wherein the substrate is mounted on a drum, which is then rotated over a sublimation or evaporation source for depositing the organic precursor (e.g., perylene red pigment) prior to annealing the organic precursor in order to form the whiskers.

Typically, the nominal thickness of deposited perylene red pigment is in a range from about 50 nm to 500 nm. Typically, the whiskers have an average cross-sectional dimension in a range from 20 nm to 60 nm, an average length in a range from 0.3 micrometer to 3 micrometers, and an areal number density in a range from 30 to 70 whiskers per square micrometer.

In some embodiments, the whiskers are attached to a backing. Exemplary backings comprise polyimide, nylon, metal foils, or other materials that can withstand the thermal annealing temperature up to 300°C. In some embodiments, the backing has an average thickness in a range from 25 micrometers to 125 micrometers.

In some embodiments, the backing has a microstructure on at least one of its surfaces. In some embodiments, the microstructure is comprised of substantially uniformly shaped and sized features at least three (in some embodiments, at least four, five, ten, or more) times the average size of the whiskers. The shapes of the microstructures can, for example, be V-shaped grooves and peaks (see, e.g., U.S. Pat. No. 6,136,412 (Spiewak et al.)) or pyramids (see, e.g., U.S. Pat. No. 7,901,829 (Debe et al.)). In some embodiments, some fraction of the microstructure features extends above the average or majority of the microstructured peaks in a periodic fashion, such as every 31$^{st}$ V-groove peak being 25% or 50% or even 100% taller than those on either side of it. In some embodiments, this fraction of features that extends above the majority of the microstructured peaks can be up to 10% (in some embodiments up to 3%, 2%, or even up to 1%). Use of the occasional taller microstructure features may facilitate protecting the uniformly smaller microstructure peaks when the coated substrate moves over the surfaces of rollers in a roll-to-roll coating operation. The occasional taller feature touches the surface of the roller rather than the peaks of the smaller microstructures, so much less of the microstructured material or whisker material is likely to be scraped or otherwise disturbed as the substrate moves through the coating process. In some embodiments, the microstructure features are substantially smaller than half the thickness of the membrane that the catalyst will be transferred to in making a membrane electrode assembly. This is so that during the catalyst transfer process, the taller microstructure features do not penetrate through the membrane where they may overlap the electrode on the opposite side of the membrane. In some embodiments, the tallest microstructure features are less than 1/3$^{rd}$ or 1/4$^{th}$ of the membrane thickness. For the thinnest ion exchange membranes (e.g., about 10 micrometers to 15 micrometers in thickness), it may be desirable to have a substrate with microstructured features no larger than about 3 micrometers to 4.5 micrometers tall. The steepness of the sides of the V-shaped or other microstructured features or the included angles between adjacent features may, in some embodiments, be desirable to be on the order of 90° for ease in catalyst transfer during a lamination-transfer process and to have a gain in surface area of the electrode that comes from the square root of two (1.414) surface area of the microstructured layer relative to the planar geometric surface of the substrate backing.

In general, the catalyst can be deposited by techniques known in the art. Exemplary deposition techniques include those independently selected from the group consisting of sputtering (including reactive sputtering), atomic layer deposition, molecular organic chemical vapor deposition, molecular beam epitaxy, thermal physical vapor deposition, vacuum deposition by electrospray ionization, and pulse laser deposition. Additional general details can be found, for example, in U.S. Pat. Nos. 5,879,827 (Debe et al.), 6,040,077 (Debe et al.), and 7,419,741 (Vernstrom et al.). The thermal physical vapor deposition method uses suitable elevated temperature (e.g., via resistive heating, electron beam gun, or laser) to melt or sublimate the target (source material) into a vapor state, which is in turn passed through a vacuum space, then condensing of the vaporized form onto substrate surfaces. Thermal physical vapor deposition equipment is known in the art, including that available, for example, as a metal evaporator or as an organic molecular evaporator from CreaPhys GmbH, Dresden, Germany, under the trade designations "METAL EVAPORATOR (ME-SERIES)" or "ORGANIC MOLECULAR EVAPORATOR (DE- SERIES)" respectively; another example of an organic materials evaporator is available from Mantis Deposition LTD, Oxfordshire, UK, under the trade designation "ORGANIC MATERIALS EVAPORATIOR (ORMA-SERIES)." Catalyst material comprising multiple alternating layers can be sputtered, for example, from multiple targets (e.g., Pt is sputtered from a first target, Ni is sputtered from a second target, and Ta from a third, or from a target(s) comprising more than one element (e.g., Pt and Ni)). If the catalyst coating is done with a single target, it may be desirable that the coating layer be applied in a single step onto the gas distribution layer, gas dispersion layer, catalyst transfer layer, or membrane, so that the heat of condensation of the catalyst coating heats the underlying catalyst or support Pt, Ni, or Ta atoms as applicable and substrate surface sufficient to provide enough surface mobility that the atoms are well mixed and form thermodynamically stable alloy domains. Alternatively, for example, the substrate can also be provided hot or heated to facilitate this atomic mobility. In some embodiments, sputtering is conducted at least in part in an atmosphere comprising argon. Organometallic forms of catalysts can be deposited, for example, by soft or reactive landing of mass selected ions. Soft landing of mass-selected ions is used to transfer catalytically-active metal complexes complete with organic ligands from the gas phase onto an inert surface. This method can be used to prepare materials with defined active sites and thus achieve molecular design of surfaces in a highly controlled way under either ambient or traditional vacuum conditions. For additional details see, for example, Johnson et al., Anal. Chem., 2010, 82, pp. 5718-5727, and Johnson et al., Chemistry: A European Journal, 2010, 16, pp. 14433-14438.

The planar equivalent thickness of an individual deposited catalyst layer is the thickness if deposited on a substantially flat, planar substrate. The planar equivalent thickness may depend, for example, on the areal catalyst loading of the layer and the catalyst density. For example, the planar equivalent thickness of a single layer of Pt with 10 micrograms of Pt per $cm^2$ planar area and density of 21.45 $g/cm^3$ deposited is calculated as 4.7 nm, and the thickness of a Ni layer (8.90 $g/cm^3$) with the same areal loading is 11.2 nm. The thickness of a deposited layer can range from a sub-monolayer to several monolayers in thickness. A monolayer is a single, closely packed layer of atoms or molecules. The thickness of a monolayer is of the dimension of the atomic or molecular diameter. The diameter of a Pt atom is about 0.27 nm. The diameter of a Ni atom is about 0.27 nm. The diameter of a Ta atom is about 0.29 nm. A sub-monolayer is the same physical thickness of a monolayer, but contains fewer atoms or molecules than a closely packed layer. For example, a Pt sub-monolayer which had 50% of the number of Pt atoms per unit area as a full monolayer has a calculated thickness which is 50% of a full monolayer (i.e., about 0.135 nm). One or more layers can be deposited, resulting in a catalyst material with an overall planar equivalent thickness equal to the sum of each constituent layer's planar equivalent thickness.

In some embodiments, the catalyst material has a thickness that is the planar equivalent thickness of the catalyst material divided by the combined surface area of the whiskers and the backing. For example, a catalyst material with a planar equivalent thickness of 20 nm deposited onto a surface comprising microstructured whiskers on a planar backing with a combined surface area of 10 $cm^2$ of surface area per $cm^2$ of planar backing area will result in a catalyst thickness of 2 nm on the whisker. The surface area of the whiskers depends upon the whisker cross-sectional dimension, whisker length, and whisker areal number density (number of whiskers per unit area of backing). In some embodiments, the surface area of the whiskers is in a range from 1 to 100 $cm^2$ per $cm^2$ of backing surface area (in some embodiments, in a range from 2 to 50 $cm^2$ per $cm^2$, 5 to 25 $cm^2$ per $cm^2$, or even 5 to 15 $cm^2$ per $cm^2$). In some embodiments, the backing may have a surface area in a range of 1 to 10 $cm^2$ per $cm^2$ planar backing area (in some embodiments, in a range from 1 to 5 $cm^2$ per $cm^2$, or even in a range from 1 to 2 $cm^2$ per $cm^2$). The combined surface area of the whiskers and the backing is the product of the whisker surface area and the backing surface area. For example, whiskers which have a surface area of 10 $cm^2$ per $cm^2$ backing area on a backing which has a surface area of 1.5 $cm^2$ of surface area per $cm^2$ planar backing area, will yield a combined surface area of 15 $cm^2$ of combined surface area per $cm^2$ planar backing area.

In some embodiments, methods for making catalyst material herein comprise annealing the catalyst. In general, annealing can be done by techniques known in the art, including heating the catalyst material via, for example, in an oven or furnace, with a laser, and with infrared techniques. Annealing can be conducted, for example, in inert or reactive gas environments. Although not wanting to be bound by theory, it is believed annealing can induce structural changes on the atomic scale which can influence activity and durability of catalysts. Further, it is believed annealing nanoscale particles and films can induce mobility in the atomic constituent(s), which can cause growth of particles or thin film grains. In the case of multi-element mixtures, alloys, or layered particles and films, it is believed annealing can induce, for example, segregation of components within the particle or film to the surface, formation of random, disordered alloys, and formation of ordered intermetallics, depending upon the component element properties and the annealing environment. For additional details regarding annealing see, for example, van der Vliet et al., Nature Materials, 2012, 11, pp. 1051-1058; Wang et al., Nature Materials, 2013, 12, pp. 81-87, and U.S. Pat. No. 8,748,330 B2 (Debe et al.).

In some embodiments, the catalyst material comprises a layer comprising platinum and nickel and a layer comprising tantalum on the layer comprising platinum and nickel. In some embodiments, the layer(s) comprising platinum and nickel collectively has a planar equivalent thickness up to 600 nm (in some embodiments, up to 575 nm, 550 nm, 500 nm, 400 nm, 300 nm, 200 nm, 100 nm, 75 nm, 50 nm, 25 nm, 10 nm, 5 nm, 2.5 nm, 1 nm, or even up to two monolayers (e.g., 0.4 nm); in some embodiments, in a range from 0.4 nm to 600 nm, 0.4 nm to 500 nm, 1 nm to 500 nm, 5 nm to 500 nm, 10 nm to 500 nm, 10 nm to 400 nm, or even 40 nm to 300 nm) and the layer comprising tantalum has a planar equivalent thickness up to 100 nm (in some embodiments, up to 75 nm, 50 nm, 45 nm, 40 nm, 35 nm, 30 nm, 25 nm, 20 nm, 15 nm, 10 nm, 5 nm, 4 nm, 3 nm, 2 nm, 1 nm, a monolayer (e.g., 0.2 nm) or even less than a monolayer (e.g., 0.01 nm); in some embodiments, in a range from 0.01 nm to 100 nm, 1 nm to 50 nm, 5 nm to 40 nm, or even 5 nm to 35 nm). In some embodiments, each layer independently has a planar equivalent thickness up to 100 nm (in some embodiments, up to 50 nm, 20 nm, 15 nm, 10 nm, 5 nm, 4 nm, 3 nm, 2 nm, 1 nm, a monolayer (e.g., 0.2 nm), or even up to less than a monolayer (e.g. 0.01 nm); in some embodiments, in a range from 0.01 nm to 100 nm, 0.01 nm to 50 nm, 0.1 nm to 15 nm, 0.1 nm to 10 nm, or even 1 nm to 5 nm).

In some embodiments, the catalyst material comprises alternating layers comprising platinum and nickel and layers comprising tantalum (i.e., a layer comprising platinum and nickel, a layer comprising tantalum, a layer comprising platinum and nickel, a layer comprising tantalum, etc.). In some embodiments, at least 2, 3, 4, 5, 10, 15, 20, 25, 50, 75, 100, 150, 200, 250, or even at least 275 sets of the alternating layers. In some embodiments, each layer independently has a planar equivalent thickness up to 100 nm (in some embodiments, up to 50 nm, 20 nm, 15 nm, 10 nm, 5 nm, 4 nm, 3 nm, 2 nm, 1 nm, a monolayer (e.g., 0.2 nm), or even up to less than a monolayer (e.g. 0.01 nm); in some embodiments, in a range from 0.01 nm to 100 nm, 0.01 nm to 50 nm, 0.1 nm to 15 nm, 0.1 nm to 10 nm, or even 1 nm to 5 nm).

In some embodiments, the catalyst material comprises a layer comprising platinum, a layer comprising nickel on the layer comprising platinum, and a layer comprising tantalum on the layer comprising nickel. In some embodiments, the catalyst material comprises a layer comprising nickel, a layer comprising platinum on the layer comprising nickel, and a layer comprising tantalum on the layer comprising platinum. In some embodiments, the catalyst has an exposed tantalum surface layer (in some embodiments, the exposed tantalum surface layer is a sub-monolayer of tantalum).

In some embodiments, the catalyst material comprises repeating sequential individual layers of platinum, nickel, and tantalum. In some embodiments, at least 2, 3, 4, 5, 10, 15, 20, 25, 50, 75, 100, 150, 200, 250, or even at least 275 sets of the repeating layers.

In some embodiments, the weight ratio of platinum to tantalum is in a range from 3:1 to 150:1, (in some embodiments, 7:1 to 150:1, 21:1 to 150:1, 50:1 to 150:1, 7:1 to 84:1, 21:1 to 84:1, 50:1 to 84:1, 7:1 to 50:1, and even 21:1 to 50:1). In some embodiments, the atomic ratio of platinum to nickel is in a range from 32.5:67.5 to 90.0: 10.0 (in some embodiments, in a range from 32.5:67.5 to 80.0:20.0; 32.5:67.5 to 70.0:30.0; 32.5:67.5 to 60.0:40.0; 32.5:67.5 to 50.0:50.0; 32.5:67.5 to 42.5:57.5; 32.5:67.5 to 40.0:60.0; 32.5:67.5 to 37.5:62.5; 32.5:67.5 to 35.0:65.0; and even 35.0:65.0 to 40.0:60.0).

In some embodiments, the catalyst is essentially nonporous (i.e., the catalyst contains spherical and/or aspherical void volume, wherein the void volume is at least 75% contained within the catalyst thin film (in some embodiments, 85, 90, 95, 99, or even 100% contained within the catalyst thin film), and wherein the average diameter of the void volume is less than 1 nm (in some embodiments, less than 0.8 nm, 0.6 nm, 0.4 nm, 0.2 nm, or even 0.01 nm)).

In some embodiments, the thickness of the catalyst material on the whiskers can be up to 100 nm (in some embodiments, up to 50 nm, 20 nm, 15 nm, 10 nm, 5 nm, 4 nm, 3 nm, 2 nm, 1 nm, a monolayer (e.g., 0.2 nm), or even up to less than a monolayer (e.g. 0.01 nm); in some embodiments, in a range from 0.01 nm to 100 nm, 0.01 nm to 50 nm, 0.1 nm to 15 nm, 0.1 nm to 10 nm, 0.1 nm to 5 nm, or even 1 nm to 5 nm).

In some embodiments, methods for making catalyst described herein comprise annealing the catalyst.

In some embodiments, methods for making catalyst described herein comprise depositing platinum and nickel from a target comprising platinum and nickel and depositing tantalum from a target comprising tantalum. In some embodiments, methods for making catalyst described herein comprise depositing platinum and nickel from a $Pt_{38}Ni_{62}$ target. In some embodiments, methods for making catalyst described herein comprise depositing layer(s) comprising platinum and nickel which each independently have a planar equivalent thickness in a range from 0.2 nm to 100 nm (in some embodiments, in a range from 0.2 nm to 20 nm, or even 0.2 nm to 10 nm) and the layer(s) comprising tantalum each independently have a planar equivalent thickness in a range from 0.01 nm to 20 nm (in some embodiments, in a range from 0.01 nm to 10 nm, 0.01 nm to 5 nm, 0.02 nm to 5 nm, 0.02 nm to 1 nm, or even 0.1 nm to 1 nm).

In some embodiments, methods for making catalyst described herein comprise depositing platinum from a target comprising platinum, depositing nickel from a target comprising nickel, and depositing tantalum from a target comprising tantalum. In some embodiments, methods for making catalyst described herein comprise depositing a layer comprising platinum, an adjacent layer comprising nickel, and an adjacent layer comprising tantalum collectively having a planar equivalent thickness in a range from 0.4 nm to 100 nm (in some embodiments, in a range from 1 nm to 100 nm, in a range from 1 nm to 50 nm, in a range from 1 nm to 30 nm, in a range from 2 nm to 50 nm, in a range from 2 nm to 30 nm, in a range from 5 nm to 50 nm, and even in a range from 10 nm to 30 nm. In some embodiments, methods for making catalyst described herein comprise depositing layer(s) comprising platinum each independently have a planar equivalent thickness in a range from 0.2 nm to 50 nm (in some embodiments, in a range from 0.2 nm to 20 nm, or even 0.2 nm to 10 nm), layers comprising nickel each independently have a planar equivalent thickness in a range from 0.2 nm to 100 nm (in some embodiments, in a range from 0.2 nm to 25 nm, or even 0.2 nm to 10 nm) and layer(s) comprising tantalum each independently have a planar equivalent thickness in a range from 0.01 nm to 20 nm (in some embodiments, in a range from 0.01 nm to 10 nm, 0.01 nm to 5 nm, 0.02 nm to 5 nm, 0.02 nm to 1 nm, or even 0.1 nm to 1 nm).

In some embodiments, catalysts described herein may further comprise Cr or Ru. The Cr and/or Ru can be incorporated into the catalyst, for example, by modifying the methods described here in to use a target comprising Cr and/or Ru, as applicable.

Catalysts described herein are useful, for example, in fuel cell membrane electrode assemblies (MEAs). "Membrane electrode assembly" refers to a layered sandwich of fuel cell materials comprising a membrane, anode and cathode electrode layers, and gas diffusion layers. Typically, the cathode catalyst layer comprises a catalyst described herein, although in some embodiments, the anode catalyst layer independently comprises a catalyst described herein.

An MEA comprises, in order:

a first gas distribution layer having first and second opposed major surfaces;
an anode catalyst layer having first and second opposed major surfaces, the anode catalyst comprising a first catalyst;
an electrolyte membrane;
a cathode catalyst layer having first and second opposed major surfaces, the cathode catalyst comprising a second catalyst; and
a second gas distribution layer having first and second opposed major surfaces.

Electrolyte membranes conduct reaction intermediate ions between the anode and cathode catalyst layers. Electrolyte membranes preferably have high durability in the electrochemical environment, including chemical and electrochemical oxidative stability. Electrolyte membranes preferably have low ionic resistance for the transport of the reaction intermediate ions, but are relatively impermeable barriers for other ions, electrons, and reactant species. In some embodiments, the electrolyte membrane is a proton exchange membrane (PEM), which conducts cations. In PEM fuel cells, the electrolyte membrane preferably conducts protons. PEMs are typically a partially fluorinated or perfluorinated polymer comprised of a structural backbone and pendant cation exchange groups, PEMs are available, for example, from E. I. du Pont de Nemours and Company, Wilmington, DE, under the trade designation "NAFION;" Solvay, Brussels, Belgium, under the trade designation "AQUIVION;" 3M Company, St. Paul, MN, under the designation "3M PFSA MEMBRANE;" and Asahi Glass Co., Tokyo, Japan, under the trade designation "FLEMION."

A gas distribution layer generally delivers gas evenly to the electrodes and, in some embodiments, conducts electricity. It also provides for removal of water in either vapor or liquid form, in the case of a fuel cell. Gas distribution layers are typically porous to allow reactant and product transport between the electrodes and the flow field. Sources of gas distribution layers include carbon fibers randomly oriented to form porous layers, in the form of non-woven paper or woven fabrics. The non-woven carbon papers are available, for example, from Mitsubishi Rayon Co., Ltd., Tokyo, Japan, under the trade designation "GRAFIL U-105;" Toray Corp., Tokyo, Japan, under the trade designation "TORAY;" AvCarb Material Solutions, Lowell, MA, under the trade designation "AVCARB;" SGL Group, the Carbon Company, Wiesbaden, Germany, under the trade designation "SIGRACET;" Freudenberg FCCT SE & Co. KG, Fuel Cell Component Technologies, Weinheim, Germany, under the trade designation "FREUDENBERG;" and Engineered Fibers Technology (EFT), Shelton, CT, under the trade designation "SPECTRACARB GDL." The woven carbon fabrics or cloths are available, for example, from ElectroChem Inc., Woburn, MA, under the trade designations "EC-CC1-060" and "EC-AC-CLOTH;" NuVant Systems Inc., Crown Point, IN, under the trade designations "ELAT-LT" and "ELAT;" BASF Fuel Cell GmbH, North America, under the trade designation "E-TEK ELAT LT;" and Zoltek Corp., St. Louis, MO, under the trade designation "ZOLTEK CARBON CLOTH." The non-woven paper or woven fabrics can be treated to modify its hydrophobicity (e.g., treatment with a polytetrafluoroethylene (PTFE) suspension with subsequent drying and annealing). Gas dispersion layers often comprise a porous layer of sub-micrometer electronically-conductive particles (e.g., carbon), and a binder (e.g., PTFE). Although not wanting to be bound by theory, it is believed that gas dispersion layers facilitate reactant and product water transport between the electrode and the gas distribution layers.

At least one of the anode or cathode catalyst is catalyst described herein (i.e., catalyst comprising nanostructured elements comprising microstructured whiskers having an outer surface at least partially covered by a catalyst material comprising Pt, Ni, and Ta, wherein the Pt is present in a range from 35.2 to 35.6 atomic percent, the Ni is present in a range from 62.9 to 63.6 atomic percent, and the Ta is present in a range from 0.78 to 1.8 atomic percent, and wherein the total atomic percent of Pt, Ni, and Ta equals 100. The "other catalyst layer" can be a conventional catalyst known in the art, and provided by techniques known in the art (e.g., U.S. Pat. Nos. 5,759,944 (Buchanan et al.), 5,068,161 (Keck et al.), and 4,447,506 (Luczak et al.)).

A fuel cell is an electrochemical device that combines hydrogen fuel and oxygen from the air to produce electricity, heat, and water. Fuel cells do not utilize combustion, and as such, fuel cells produce little if any hazardous effluents. Fuel cells convert hydrogen fuel and oxygen directly into electricity, and can be operated at much higher efficiencies than internal combustion electric generators, for example.

Referring to FIG. 2, exemplary fuel cell 200 includes first gas distribution layer 201 adjacent to anode 203. Adjacent anode 203 is an electrolyte membrane 204. Cathode 205 is situated adjacent the electrolyte membrane 204, and second gas distribution layer 207 is situated adjacent cathode 205. In operation, hydrogen fuel is introduced into the anode portion of the fuel cell 200, passing through the first gas distribution layer 201 and over anode 203. At anode 203, the hydrogen fuel is separated into hydrogen ions ($H^+$) and electrons ($e^-$).

Electrolyte membrane 204 permits only the hydrogen ions or protons to pass through electrolyte membrane 204 to the cathode portion of fuel cell 200. The electrons cannot pass through the electrolyte membrane 204 and, instead, flow through an external electrical circuit in the form of electric current. This current can power an electric load 217, such as an electric motor, or be directed to an energy storage device, such as a rechargeable battery.

Oxygen flows into the cathode side of fuel cell 200 via second distribution layer 207. As the oxygen passes over cathode 205, oxygen, protons, and electrons combine to produce water and heat.

Exemplary Embodiments

1A. A catalyst comprising nanostructured elements comprising microstructured whiskers having an outer surface at least partially covered by a catalyst material comprising Pt, Ni, and Ta, wherein the Pt is present in a range from 35.2 to 35.6 atomic percent, the Ni is present in a range from 62.9 to 63.6 atomic percent, and the Ta is present in a range from 0.78 to 1.8 atomic percent, and wherein the total atomic percent of Pt, Ni, and Ta equals 100.

2A. The catalyst of Exemplary Embodiment 1A, wherein the catalyst material comprises a layer comprising platinum and nickel and a layer comprising tantalum on the layer comprising platinum and nickel.

3A. The catalyst of Exemplary Embodiment 2A, wherein the layer(s) comprising platinum and nickel collectively has a planar equivalent thickness up to 600 nm (in some embodiments, up to 575 nm, 550 nm, 500 nm, 400 nm, 300 nm, 200 nm, 100 nm, 75 nm, 50 nm, 25 nm, 10 nm, 5 nm, 2.5 nm, 1 nm, or even up to two monolayers (e.g., 0.4 nm); in some embodiments, in a range from 0.4 nm to 600 nm, 0.4 nm to 500 nm, 1 nm to 500 nm, 5 nm to 500 nm, 10 nm to 500 nm, 10 nm to 400 nm, or even 40 nm to 300 nm) and the layer comprising tantalum has a planar equivalent thickness up to 100 nm (in some embodiments, up to 75 nm, 50 nm, 45 nm, 40 nm, 35 nm, 30 nm, 25 nm, 20 nm, 15 nm, 10 nm, 5 nm, 4 nm, 3 nm, 2 nm, 1 nm, a monolayer (e.g., 0.2 nm) or even less than a monolayer (e.g., 0.01 nm); in some embodiments, in a range from 0.01 nm to 100 nm, 1 nm to 50 nm, 5 nm to 40 nm, or even 5 nm to 35 nm).

4A. The catalyst of Exemplary Embodiment 3A, wherein each layer independently has a planar equivalent thickness up to 100 nm (in some embodiments, up to 50 nm, 20 nm, 15 nm, 10 nm, 5 nm, 4 nm, 3 nm, 2 nm, 1 nm, a monolayer (e.g., 0.2 nm), or even up to less than a monolayer (e.g. 0.01 nm); in some embodiments, in a range from 0.01 nm to 100 nm, 0.01 nm to 50 nm, 0.1 nm to 15 nm, 0.1 nm to 10 nm, or even 1 nm to 5 nm).

5A. The catalyst of Exemplary Embodiment 1A, wherein the catalyst material comprises alternating layers comprising platinum and nickel and layers comprising tantalum (i.e., a layer comprising platinum and nickel, a layer comprising tantalum, a layer comprising platinum and nickel, a layer comprising tantalum, etc.). In some embodiments, at least 2, 3, 4, 5, 10, 15, 20, 25, 50, 75, 100, 150, 200, 250, or even at least 275 sets of the alternating layers.

6A. The catalyst of Exemplary Embodiment 5A, wherein each layer independently has a planar equivalent thickness up to 100 nm (in some embodiments, up to 50 nm, 20 nm, 15 nm, 10 nm, 5 nm, 4 nm, 3 nm, 2 nm, 1 nm, a monolayer (e.g., 0.2 nm), or even up to less than a monolayer (e.g. 0.01 nm); in some embodiments, in a range from 0.01 nm to 100 nm, 0.01 nm to 50 nm, 0.1 nm to 15 nm, 0.1 nm to 10 nm, or even 1 nm to 5 nm).

7A. The catalyst of Exemplary Embodiment 1A, wherein the catalyst material comprises a layer comprising platinum, a layer comprising nickel on the layer comprising platinum, and a layer comprising tantalum on the layer comprising nickel.

8A. The catalyst of Exemplary Embodiment 1A, wherein the catalyst material comprises a layer comprising nickel, a layer comprising platinum on the layer comprising nickel, and a layer comprising tantalum on the layer comprising platinum.

9A. The catalyst of any preceding A Exemplary Embodiment having an exposed tantalum surface layer (in some embodiments, the exposed tantalum surface layer is a sub-monolayer of tantalum).

10A. The catalyst of Exemplary Embodiment 1A, wherein the catalyst material comprises repeating sequential individual layers of platinum, nickel, and tantalum. In some embodiments, at least 2, 3, 4, 5, 10, 15, 20, 25, 50, 75, 100, 150, 200, 250, or even at least 275 sets of the repeating layers.

11A. The catalyst of any preceding A Exemplary Embodiment, wherein the weight ratio of platinum to tantalum is in a range from 3:1 to 150:1, (in some embodiments, 7:1 to 150:1, 21:1 to 150:1, 50:1 to 150:1, 7:1 to 84:1, 21:1 to 84:1, 50:1 to 84:1, 7:1 to 50:1, and even 21:1 to 50:1).

12A. The catalyst of any preceding A Exemplary Embodiment, wherein the atomic ratio of platinum to nickel is in a range from 32.5:67.5 to 90.0: 10.0 (in some embodiments, in a range from 32.5:67.5 to 80.0:20.0; 32.5:67.5 to 70.0:30.0; 32.5:67.5 to 60.0:40.0; 32.5:67.5 to 50.0:50.0; 32.5:67.5 to 42.5:57.5; 32.5:67.5 to 40.0:60.0; 32.5:67.5 to 37.5:62.5; 32.5:67.5 to 35.0:65.0; and even 35.0:65.0 to 40.0:60.0).

13A. The catalyst of any preceding A Exemplary Embodiment, wherein the catalyst is essentially nonporous.

14A. The catalyst of any preceding A Exemplary Embodiment, wherein the catalyst material has a thickness up to 100 nm (in some embodiments, up to 50 nm, 20 nm, 15 nm, 10 nm, 5 nm, 4 nm, 3 nm, 2 nm, 1 nm, a monolayer (e.g., 0.2 nm), or even up to less than a monolayer (e.g. 0.01 nm); in some embodiments, in a range from 0.01 nm to 100 nm, 0.01 nm to 50 nm, 0.1 nm to 15 nm, 0.1 nm to 10 nm, 0.1 nm to 5 nm, or even 1 nm to 5 nm).

15A. A fuel cell membrane electrode assembly comprising the catalyst of any preceding A Exemplary Embodiment.

16A. The fuel cell membrane electrode assembly of Exemplary Embodiment 15A, wherein the catalyst is an oxygen reduction reaction catalyst.

1B. A method comprising annealing the catalyst of any of Exemplary Embodiments 1A to 14A.

1C. A method of making the catalyst of any of Exemplary Embodiments 1A to 14A, the method comprising depositing platinum and nickel from a target comprising platinum and nickel and depositing tantalum from a target comprising tantalum.

2C. The method of Exemplary Embodiment 1C, wherein the target is a $Pt_{38}Ni_{62}$ target.

3C. The method of any preceding C Exemplary Embodiment, wherein layer(s) comprising platinum and nickel each independently have a planar equivalent thickness in a range from 0.2 nm to 100 nm (in some embodiments, in a range from 0.2 nm to 20 nm, or even 0.2 nm to 10 nm) and the layer(s) comprising tantalum each independently have a planar equivalent thickness in a range from 0.01 nm to 20 nm (in some embodiments, in a range from 0.01 nm to 10 nm, 0.01 nm to 5 nm, 0.02 nm to 5 nm, 0.02 nm to 1 nm, or even 0.1 nm to 1 nm).

4C. The method of any preceding C Exemplary Embodiment, further comprising annealing the catalyst.

1D. A method of making the catalyst of any of Exemplary Embodiments 1A to 14A, the method comprising depositing platinum from a target comprising platinum, depositing nickel from a target comprising nickel, and depositing tantalum from a target comprising tantalum.

2D. The method of Exemplary Embodiment 1D, wherein a layer comprising platinum, an adjacent layer comprising nickel, and an adjacent layer comprising tantalum collectively having a planar equivalent thickness in a range from 0.4 nm to 100 nm (in some embodiments, in a range from 1 nm to 100 nm, in a range from 1 nm to 50 nm, in a range from 1 nm to 30 nm, in a range from 2 nm to 50 nm, in a range from 2 nm to 30 nm, in a range from 5 nm to 50 nm, and even in a range from 10 nm to 30 nm).

3D. The method of Exemplary Embodiment 1D, wherein layer(s) comprising platinum each independently have a planar equivalent thickness in a range from 0.2 nm to 50 nm (in some embodiments, in a range from 0.2 nm to 20 nm, or even 0.2 nm to 10 nm), layers comprising nickel each independently have a planar equivalent thickness in a range from 0.2 nm to 100 nm (in some embodiments, in a range from 0.2 nm to 25 nm, or even 0.2 nm to 10 nm) and layer(s) comprising tantalum each independently have a planar equivalent thickness in a range from 0.01 nm to 20 nm (in some embodiments, in a range from 0.01 nm to 10 nm, 0.01 nm to 5 nm, 0.02 nm to 5 nm, 0.02 nm to 1 nm, or even 0.1 nm to 1 nm).

4D. The method of any preceding D Exemplary Embodiment, further comprising annealing the catalyst.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

**Examples**

Preparatory Example

Microstructured whiskers employed as catalyst supports were made according to the process described in U.S. Pat. Nos. 5,338,430 (Parsonage et al.), 4,812,352 (Debe), and 5,039,561 (Debe), using as substrates the microstructured catalyst transfer substrates (or MCTS) described in U.S. Pat. No. 6,136,412 (Spiewak et al.). Perylene red pigment (i.e., N,N'-di(3,5-xylyl)perylene-3,4:9,10-bis(dicarboximide)) (C.I. Pigment Red 149, also known as "PR149", obtained from Clariant, Charlotte, NC) was sublimation vacuum coated onto MCTS with a nominal thickness of 200 nm, after which it was annealed. After deposition and annealing, highly oriented crystal structures were formed with large aspect ratios, controllable lengths of about 0.8 micrometer, widths of about 0.03 micrometer and areal number density of about 50 whiskers per square micrometer, oriented substantially normal to the underlying substrate. The combined surface area of the whiskers and the backing was estimated to be about 5.5 $cm^2$ per $cm^2$ planar substrate area.

Nanostructured thin film (NSTF) catalyst layers were prepared by sputter coating catalyst films sequentially using a DC-magnetron sputtering process onto the layer of microstructured whiskers. A vacuum sputter deposition system was used with typical Ar sputter gas pressures of about 5 mTorr (0.66 Pa), and individual 12.7 cm x 38.1 cm (5-inch x 15-inch) rectangular Pt and Ni sputter targets were used. The coatings were deposited by using ultra high purity Ar as the sputtering gas. A single Pt layer with planar equivalent thickness of about 0.25 nm was first deposited onto the whiskers on MCTS from a pure Pt target. Next, a single Ni layer with planar equivalent thickness of about 0.31 nm was deposited from a pure Ni target. The Pt and Ni deposition processes were repeated 50 times, resulting in an areal loading of about 0.0275 $mg_{Pt}/cm^2$. The targeted individual Pt and Ni layer thicknesses were calculated to yield an overall composition of 37.5 at.% Pt and 62.5 at.% Ni for the combined layers. A total of about 50 linear feet of catalyzed whiskers on MCTS substrate were generated. The targeted composition of the Preparatory Example is listed in Table 1, below.

Table 1

| Example | Pt Loading, microg/cm² | Ni Loading, microg/cm² | Ta Loading, microg/cm² | Pt Content, at.% | Ni Content, at.% | Ta Content, at. % |
|---|---|---|---|---|---|---|
| Prep. Ex. | 27.5 | 14 | 0.00 | 37.15 | 62.85 | 0.00 |
| Comp.Ex. | 27.5 | 14 | 0.00 | 37.15 | 62.85 | 0.00 |
| 1 | 27.5 | 14 | 0.18 | 37.05 | 62.69 | 0.26 |
| 2 | 27.5 | 14 | 0.36 | 36.95 | 62.53 | 0.52 |
| 3 | 27.5 | 14 | 0.72 | 36.76 | 62.20 | 1.04 |
| 4 | 27.5 | 14 | 1.46 | 36.37 | 61.54 | 2.08 |
| 5 | 27.5 | 14 | 3.77 | 35.22 | 59.59 | 5.20 |
| 6 | 27.5 | 14 | 7.95 | 33.29 | 56.33 | 10.38 |

The Preparatory Example's catalyst material's calculated planar equivalent thicknesses and the thickness of the catalyst material on the whisker support are listed in Table 2, below.

Table 2

| Example | Pt and Ni Planar Equivalent Thickness, nm | Ta Planar Equivalent Thickness, nm | Pt and Ni Thickness on Whisker, nm | Ta Thickness on Whisker, nm |
|---|---|---|---|---|
| Prep. Ex. | 28.54 | 0.00 | 5.19 | 0.00 |
| Comp. Ex. | 28.54 | 0.00 | 5.19 | 0.00 |
| 1 | 28.54 | 0.11 | 5.19 | 0.02 |
| 2 | 28.54 | 0.22 | 5.19 | 0.04 |

(continued)

| Example | Pt and Ni Planar Equivalent Thickness, nm | Ta Planar Equivalent Thickness, nm | Pt and Ni Thickness on Whisker, nm | Ta Thickness on Whisker, nm |
|---|---|---|---|---|
| 3 | 28.54 | 0.44 | 5.19 | 0.08 |
| 4 | 28.54 | 0.89 | 5.19 | 0.16 |
| 5 | 28.54 | 2.30 | 5.19 | 0.42 |
| 6 | 28.54 | 4.85 | 5.19 | 0.88 |

The total planar equivalent thicknesses of the Pt and Ni deposited was 28.54 nm. When deposited onto the whisker-coated baking, the total Pt and Ni thickness on the support was 5.19 nm, 5.5 times less than the planar equivalent thickness.

Representative areas of the electrocatalyst were analyzed for bulk composition using X-Ray Fluorescence spectroscopy (XRF). Representative catalyst samples were evaluated on MCTS using a wavelength dispersive X-ray fluorescence spectrometer (obtained under the trade designation "PRIMUS II" from Rigaku Corporation, Tokyo, Japan) equipped with a rhodium (Rh) X-ray source, a vacuum atmosphere, and a 20-mm diameter measurement area. Each sample was analyzed three times to obtain the average and standard deviation for the measured Pt and Ni signal intensities, which are proportional to loading. The electrocatalyst's Pt and Ni loadings were determined by comparing their measured XRF intensities to the XRF intensities obtained with standard NSTF electrocatalysts containing Pt and Ni with known areal loadings. From the XRF-determined Pt and Ni loading, the catalyst's Pt content (at.% Pt) was calculated, based on the Pt and Ni loadings only. Loading and composition information is provided in Table 3, below. The Pt content of the Preparatory Example was 35.3 at.% and the Ni content was 64.69 at.%.

Table 3

| Example | Pt Loading, microg/cm$^2$ | Ni Loading, microg/cm$^2$ | Ta XRF Intensity, kCounts/sec | Ta Loading, microg/cm$^2$ | Pt Content, at.% | Ni Content, at. % | Ta Content, at. % | Pt: Ta Weight Ratio |
|---|---|---|---|---|---|---|---|---|
| Prep. Ex. | 26.3 | 14.5 | Not measured | 0 | 35.31 | 64.69 | 0.00 | Infinite |
| Comp. Ex. | 26.3 | 14.5 | Not measured | 0 | 35.31 | 64.69 | 0.00 | Infinite |
| 1* | 26.7 | 14.4 | 0.13 | 0.18 | 35.72 | 64.02 | 0.26 | 150 |
| 2* | 27.1 | 14.6 | 0.19 | 0.32 | 35.67 | 63.87 | 0.46 | 84 |
| 3 | 27.0 | 14.5 | 0.28 | 0.55 | 35.63 | 63.59 | 0.78 | 50 |
| 4 | 26.8 | 14.4 | 0.58 | 1.28 | 35.25 | 62.94 | 1.82 | 21 |
| 5* | 27.0 | 14.5 | 1.59 | 3.75 | 34.08 | 60.81 | 5.11 | 7 |
| 6* | 26.8 | 14.4 | 3.49 | 8.41 | 32.01 | 57.16 | 10.83 | 3 |
| * not according to the invention | | | | | | | | |

The Preparatory Example material was used as input material for the Comparative Example and Examples 1-6, described below.

Comparative Example

The Comparative Example consisted of the Preparatory Example, without any additional deposition. Typically, two or more nominally identical electrocatalyst samples of a given type were fabricated and characterized as described below.

The Preparatory Example electrocatalyst was thermally annealed. Electrocatalyst on MCTS was placed into a quartz tube furnace (obtained under the trade designation "LINDBERG BLUE M" from Thermo Electron Corporation, Waltham, MA) and heated to 340°C under flowing $H_2$. After about a 20-minute temperature ramp, the catalyst was annealed for about 0.5 hour at temperature, and then allowed to cool to room temperature over about a 3-hour period. After cooling to room temperature, the tube furnace was purged with nitrogen for about 15 minutes to remove any remaining $H_2$, after which the catalyst on the substrate was removed from the furnace.

Without being bound by theory, annealed PtNi electrocatalyst with this composition and loading on NSTF supports is structurally and compositionally homogenous, composed of fused nanoscopic catalyst particles, with an approximate electrocatalyst thickness on the support whisker less than 10 nm.

The Comparative Example catalyst and NSTF PtCoMn coated anode catalyst whiskers (0.05 $mg_{Pt}$/cm$^2$, $Pt_{69}Co_{28}Mn_3$) on MCTS were then transferred to either side of a 24-micrometer thick proton exchange membrane (obtained under the trade designation "3M PFSA 825EW" (neat) from 3M Company, St. Paul, MN), using a laminator (obtained under the trade designation "HL-101" from ChemInstruments, Inc., West Chester Township, OH) to form a catalyst coated membrane (CCM). The three-layer stack-up was hand fed into the laminator with hot nip rolls at 270°F (132°C), 150 psi (1.03 MPa) nip, and rotating at the equivalent of 0.5 fpm (0.25 cm/s). Immediately after lamination, the MCTS layers were peeled back, leaving the catalyst coated whiskers embedded into either side of the PEM. The CCM was installed with identical gas diffusion layers (obtained under the trade designation "3M 2979 GAS DIFFUSION LAYERS" from 3M Company) on the anode and cathode in 50 cm$^2$ active area test cells (obtained under the trade designation "50 CM$^2$ CELL HARDWARE" from Fuel Cell Technologies, Inc., Albuquerque, NM) with quad-serpentine flow fields with gaskets selected to give 10% compression of the gas diffusion layers. The Comparative Example catalyst was evaluated as the fuel cell cathode.

After assembly, the test cells were connected to a test station (obtained under the trade designation "SINGLE FUEL CELL TEST STATION" from Fuel Cell Technologies, Inc.). The MEA was then operated for about 40 hours under a conditioning protocol to achieve apparent steady state performance. The protocol consisted of repeated cycles of operational and shutdown phases, each about 40 and 45 minutes in duration, respectively. In the operational phase, the MEA was operated at 75°C cell temperature, 70°C dewpoint, 101/101 kPaA $H_2$/Air, with constant flow rates of 800 and 1800 standard cubic centimeters per minute (sccm) of $H_2$ and air, respectively. During the 40-minute operational phase, the cell voltage was alternated between 5-minute-long polarization cycles between 0.85 V and 0.25 V and 5-minute-long potential holds at 0.40 V. During the 45-minute shutdown phase, the cell potential was set to open circuit voltage, $H_2$ and air flows to the cell were halted, and the cell temperature was cooled towards room temperature while liquid water was injected into the anode and cathode cell inlets at 0.26 g/min. and 0.40 g/min., respectively.

After conditioning the MEAs, the electrocatalysts were characterized for relevant beginning of life (BOL) characteristics, including catalyst mass activity, specific surface area, specific activity, and operational performance under relevant $H_2$/Air test conditions, described as follows.

The cathode oxygen reduction reaction (ORR) absolute activity was measured with saturated 150 kPaA $H_2$/$O_2$, 80°C cell temperature for 1200 seconds at 900 mV vs. the 100% $H_2$ reference/counter electrode. The ORR absolute activity (A/cm$^2$ or mA/cm$^2$) was obtained by adding the measured current density after 1050 seconds of hold time and the electronic shorting and hydrogen crossover current densities, estimated from 2 mV/s cyclic voltammograms measured with $N_2$ fed to the working electrode instead of $O_2$. The electrocatalyst mass activity, a measure of the catalyst activity per unit precious metal content, is calculated by dividing the corrected ORR absolute activity (A/cm$^2_{planar}$) by the cathode Pt areal loading (mg/cm$^2$) to obtain the mass activity (A/$mg_{Pt}$). The mass activity of the Comparative Example is listed in Table 4, below.

Table 4

| Example | Ta Content, at. % | Samples Evaluated | Mass Activity, A/mg | | Specific Area, m2/g | | Specific Activity, mA/cm2Pt | |
|---|---|---|---|---|---|---|---|---|
| | | | Mean | Std. Dev. | Mean | Std. Dev. | Mean | Std. Dev. |
| Comp. Ex. | 0.00 | 2 | 0.38 | 0.03 | 18.4 | 0.1 | 2.08 | 0.13 |
| 1* | 0.26 | 2 | 0.36 | 0.01 | 17.6 | 1.3 | 2.04 | 0.21 |
| 2* | 0.52 | 2 | 0.36 | 0.04 | 17.4 | 1.0 | 2.06 | 0.13 |
| 3 | 1.04 | 4 | 0.46 | 0.09 | 19.8 | 2.4 | 2.29 | 0.33 |
| 4 | 2.08 | 2 | 0.46 | 0.01 | 19.5 | 1.2 | 2.38 | 0.18 |
| 5* | 5.20 | 2 | 0.38 | 0.04 | 21.6 | 1.7 | 1.76 | 0.31 |
| 6* | 10.38 | 2 | 0.33 | 0.03 | 18.9 | 2.1 | 1.75 | 0.03 |
| * not according to the invention | | | | | | | | |

The cathode catalyst surface enhancement factor (SEF, $m^2_{Pt}/m^2_{planar}$ or analogously $cm^2_{Pt}/cm^2_{planar}$) was measured via cyclic voltammetry (100 mV/s, 0.65 V-0.85 V, average of 100 scans) under saturated 101 kilopascals absolute pressure (kPaA) $H_2/N_2$ and 70°C cell temperature. The SEF was estimated by taking the average of the integrated hydrogen underpotential deposition ($H_{UPD}$) charge ($\mu C/cm^2_{planar}$) for the oxidative and reductive waves and dividing by 220 microC/$cm^2_{Pt}$. The electrocatalyst's specific surface area ($m^2_{Pt}/g_{pt}$), a measure of catalyst dispersion, was calculated by dividing the SEF ($m^2_{Pt}/m^2_{planar}$) by the areal Pt loading ($g_{Pt}/m^2_{planar}$). The specific area is reported in Table 4, above.

The cathode catalyst oxygen reduction specific activity was calculated by dividing the corrected ORR absolute activity ($A/cm^2_{planar}$) by the SEF ($cm^2_{Pt}/cm^2_{planar}$) to obtain the specific activity expressed in ($A/cm^2_{pt}$), or after unit conversion as $mA/cm^2_{Pt}$ (multiply ($A/cm^2$) by 1000 mA per A). The specific activity is reported in Table 4, above. The specific activity is a measure of catalyst activity per unit catalyst surface area, a measure of fundamental catalyst activity.

After activities and surface area characterizations were complete, the $H_2$/Air performance of the MEA was measured. MEAs were operated at 80°C cell temperature, with the cathode exposed to air (68°C dewpoint, 150 kPaA, constant stoichiometry 2.5) and anode exposed to $H_2$ (68°C dewpoint, 150 kPaA, constant stoichiometry 2.0). The MEA current density (J) was stepwise incremented up from 0.02 $A/cm^2$ until the cell voltage reached 0.50 V, or J reached 2 $A/cm^2$, at which point the scan was reversed. J steps were spaced at 10 per decade and 0.1 $A/cm^2$. Polarization data was collected at ~1 Hz with a 120 second dwell time at each J. The average of all datapoints at each J setpoint from the high-to-low current portion of the polarization curve were generated.

Next, the catalyst durability was evaluated using an accelerated stress test (AST). The MEA was operated at 80°C cell temperature, with the cathode exposed to nitrogen (80°C dewpoint, 100 kPaA, constant flow 1800 sccm) and the anode exposed to $H_2$ (80°C dewpoint, 100 kPaA, constant flow 800 sccm). Using a potentiostat (obtained under the trade designation "SOLARTRON 1470" from Solartron Analytical, Leicester, England), the cathode electrode potential was cycled 30,000 between 0.60 and 1.00V vs. the $H_2$ anode electrode reference potential at 50 mV/s using a triangle wave. After the 30,000 cycles were complete, the MEA was reconditioned and cathode activity, surface area, and the $H_2$/Air performance was again measured.

The changes in mass activity, specific area, specific activity, cell voltage at 0.02 $A/cm^2$, cell voltage at 0.32 $A/cm^2$ and in current density at 0.50 V of the Comparative Example after the AST are listed in Table 5, below.

Table 5

| Example | Mass Activity Change, % | Specific Area Change, % | Specific Activity Change, % | V @ 0.02A/cm2 Change, mV | V @ 0.32A/cm2 Change, mV | J @ 0.50V Change, % |
|---|---|---|---|---|---|---|
| Comparative Example | -54 ± 8 | -36 ± 4 | -27 ± 18 | -60 ± 3 | -157 ± 182 | -65 ± 0 |

(continued)

| Example | Mass Activity Change, % | Specific Area Change, % | Specific Activity Change, % | V @ 0.02A/cm$^2$ Change, mV | V @ 0.32A/cm$^2$ Change, mV | J @ 0.50V Change, % |
|---|---|---|---|---|---|---|
| Example 4 | -27 | -10 | -7 | -29 $\pm$ 7 | - 79 $\pm$ 26 | -41 $\pm$ 12 |

Example 1

Example 1 catalyst was prepared and characterized similarly to the Comparative Example, except that prior to thermal annealing, tantalum was deposited onto the surface of the Preparatory Example catalyst and additional XRF characterization was conducted to estimate the tantalum content. Additionally, the durability of Example 1 was not measured.

A vacuum sputter deposition system was used to deposit tantalum with typical Ar sputter gas pressures of about 5 mTorr (0.66 Pa), and an individual 12.7 cm x 38.1 cm (5-inch x 15-inch) rectangular Ta sputter target. Prior to sputter depositing tantalum onto the Preparatory Example catalyst, gravimetric calibration of the tantalum sputter deposition was conducted to determine areal tantalum loadings as a function of target power at fixed web speed. Table 6, below, summarizes the calibration data generated, and this data was used to estimate deposition conditions (target power, web speed, and number of passes) needed to deposit specific areal loadings of tantalum.

Table 6

| Sample ID | Power, kW | Speed, mpm (fpm) | No. Passes | Average Load, microg/cm$^2$ | Loading Standard Deviation, microg/cm$^2$ |
|---|---|---|---|---|---|
| Calib. 1 | 0.25 | 18.3 (60) | 50 | 10.7 | 0.3 |
| Calib. 2 | 0.50 | 18.3 (60) | 50 | 20.7 | 1.6 |
| Calib. 3 | 1.00 | 18.3 (60) | 50 | 39.8 | 0.4 |
| Calib. 4 | 1.50 | 18.3 (60) | 50 | 59.2 | 0.4 |

Using the Table 6 calibration data, deposition conditions were determined which would result in 0.18 microgram/cm$^2$ tantalum. A 2-lineal foot section of the Preparatory Example catalyst was loaded into the sputter system, and tantalum coating was deposited by using ultra high purity Ar as the sputtering gas. The Example 1 catalyst's composition, based on the targeted Pt, Ni, and Ta areal loadings, is summarized in Table 1, above. The Example 1 targeted catalyst composition was 37.05 at.% Pt, 62.69 at.% Ni, and 0.26 at.% Ta. The Example 1 catalyst's calculated planar equivalent thicknesses and thicknesses on the support are summarized in Table 2, above. The total planar equivalent thicknesses of the Pt and Ni deposited was 28.54 nm and the total planar equivalent thickness of Ta deposited was 0.11 nm. When deposited onto the whisker-coated baking, the total Pt and Ni thickness on the support was 5.19 nm and the total Ta thickness on the support was 0.02 nm.

After Ta deposition, the catalyst's Pt, Ni, and Ta areal loadings were measured by XRF, similarly to that performed for the Preparatory Example, except that the relative Ta areal loading was measured in addition to the absolute Pt and Ni areal loadings. The Ta content is reported as the measured XRF intensity in kilocounts per second. The XRF composition analysis is reported in Table 3, above.

Examples 2-6

Example 2-6 catalyst was prepared and characterized similarly to Example 1, but the surface tantalum content was varied. Additionally, the durability of Example 4 only was evaluated using the AST as described for the Comparative Example.

The targeted tantalum areal loadings were 0.36, 0.72, 1.46, 3.77, and 7.95 microgram/cm$^2$ for Examples 2- 6, respectively. The catalysts' compositions, based on the targeted Pt, Ni, and Ta areal loadings, are summarized in Table 1, above. The targeted catalyst compositions for Example 2- 6 were, respectively, 36.95, 36.76, 36.37, 35.22, and 33.29 at.% Pt, 62.53, 62.20, 61.54, 59.59, and 56.33 at.% Ni, and 0.52, 1.04, 2.08, 5.20, 10.38 at.% tantalum. The catalysts calculated planar equivalent thicknesses and thicknesses on the support are summarized in Table 2, above. Catalyst composition after Ta deposition was measured by XRF and is summarized in Table 3, above.

The compositions of Example 2, 4, and 6 catalysts after deposition was additionally measured using Inductively-Coupled Plasma Atomic Emission Spectroscopy (ICP-AES) to allow for determination of absolute Pt, Ni, and Ta areal loadings, summarized in Table 7, below. The samples were prepared in triplicate. Sample discs of 35-mm diameter (about 77 mg) were weighed to the nearest 0.1 mg into 15-mL polypropylene centrifuge tubes. 5 mL of concentrated hydrochloric acid, 1.5 mL of deionized water, and 2 mL of 30% hydrogen peroxide were added (in that order) to completely submerge the samples. The same reagents were added to two empty tubes for use as blanks. The tubes were quickly sealed, inverted several times to mix the contents, and the caps were then loosened to permit the release of reaction gases. The tubes were stored overnight in a fume hood at room temperature. The samples were mixed periodically to remove bubbles and expose all sample surfaces to the acid mixture. Once the metals had completely dissolved, the solutions were diluted to 10 mL with 18.2-MΩ deionized water. Prior to analysis, the solutions were diluted an additional 2-fold or 100-fold by volume with 18.2-MΩ deionized water. The instrument used for elemental analysis was an optical emission spectrophotometer (obtained under the trade designation "PERKIN ELMER OPTIMA 8300 ICP" from Perkin Elmer, Waltham, MA). The samples were analyzed against external calibration curves generated using acid-matched solution standards containing 0, 0.5, 1, and 2 ppm of each analyte. A 0.5-ppm quality control standard was used to monitor the accuracy of the calibration curves during the analysis. A 0.5-ppm scandium solution was run in-line with the samples and standards to serve as an internal standard.

ICP-AES confirmed that the measured catalyst Ta areal loadings were similar to the targeted Ta areal loadings. The measured Ta loadings for Examples 2, 4, and 6 were 0.27, 1.34, and 8.4 microgram(s)/cm$^2$, respectively, as compared to the targeted loadings of 0.36, 1.46, and 7.95 microgram(s)/cm$^2$. The measured Ta content for Examples 2, 4, and 6 were 0.4, 2.0, and 11.3 at.%, respectively, as compared to the targeted Ta contents of 0.52, 2.08, and 10.38 at.%.

Table 7

| Example | Pt Loading, microg/cm$^2$ | Ni Loading, microg/cm$^2$ | Ta Loading, microg/cm$^2$ | Pt Content, at. % | Ni Content, at.% | Ta Content, at. % |
|---|---|---|---|---|---|---|
| 2 | 24.0 ± 0.3 | 14.7 ± 0.1 | 0.27 ± 0.01 | 32.8 | 66.8 | 0.4 |
| 4 | 23 ± 1 | 14 ± 1 | 1.34 ± 0.001 | 32.4 | 65.5 | 2.0 |
| 6 | 23.2 ± 0.9 | 14.4 ± 0.8 | 8.4 ± 0.2 | 29.0 | 59.7 | 11.3 |

Using the measured ICP-AES Ta areal loadings from Table 7, above, and the measured XRF intensities in Table 3, above, a calibration of loading vs. intensity was generated for Examples 2, 4, and 6 via linear regression analysis, shown in FIG. 3. The linear regression analysis result is summarized in EQN. 1, below, and the R-squared value was 0.9997. EQN. 1 was used to determine the Ta loadings for Examples 1-6 in Table 3, above, where $L_{Ta}$ is the tantalum areal loading in micrograms per cm$^2$ and $I_{Ta}$ is the XRF measured Ta intensity in kilocounts per second. The Pt, Ni, and Ta tantalum loadings from Table 3, above, were used to calculate the Pt, Ni, and Ta contents (at.%) and the Pt:Ta weight ratios in Table 3, above.

$$\text{EQN. 1: } L_{Ta}\ (\mu g/cm^2) = 2.450 * I_{Ta} - 0.141$$

Results

FIG. 4 and Table 4, above, summarize the measured mass activity for Examples 1-6. The mass activity was essentially insensitive to tantalum content between 0.26 and 0.52 at.% and was about 0.36 A/mg. As tantalum content was increased to about 1.0 at.%, the mass activity surprisingly increased to 0.45A/mg (25% increase vs. lower Ta content). As Ta content was increased to about 2.1 at.%, mass activity increased to 0.46 A/mg. As tantalum content increased to about 5 and 10 at.%, mass activity decreased to 0.38 and 0.33 A/mg, respectively. The composition range where the mass activity exceeded the Comparative Example, 0.38 A/mg, is above about 0.5 at.% Ta and below about 5 at.% Ta.

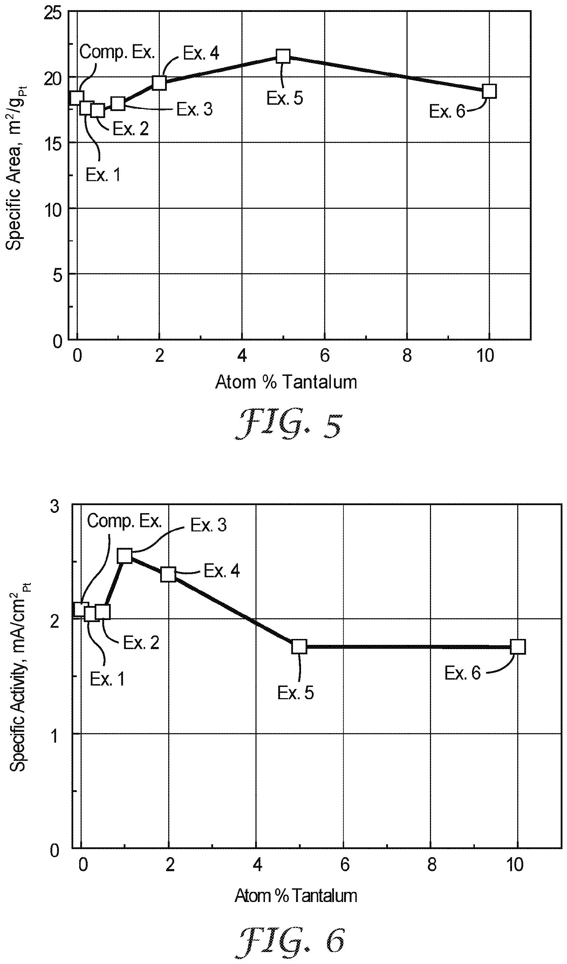

FIG. 5 and Table 4, above, summarize the measured specific surface area for the Examples 1-6. Specific surface area increased from about 17.5 m$^2$/g to 21.6 m$^2$/g as Ta content increased from about 0.50 to about 5 at.%, and then decreased to 18.9 m$^2$/g was Ta was increased to about 10 at.%. The composition range where the specific area exceeded Comparative Example 1, 18.4 m$^2$/g, was above about 0.5 at.% Ta up to about 10 at.% Ta.

FIG. 6 and Table 4, above, summarize the measured specific activity for Example 1-6. The specific activity increased from 2.04 mA/cm$^2$$_{Pt}$ at about 0.25 at.% Ta to 2.06 and 2.54 mA/cm$^2$$_{Pt}$ at 0.5 and 1.0 at.% Ta. As Ta content was increased to 2 at.%, the specific activity decreased to 2.38 mA/cm$^2$$_{Pt}$, which was lower than 1 at.% but still higher than Ta free catalyst. As Ta content was increased further to 5 and 10 at.%., the specific activity decreased to 1.76 and 1.75 mA/cm$^2$$_{Pt}$. The composition range where the specific activity exceeded the Comparative Example, 2.08 mA/cm$^2$$_{Pt}$, was above 0.5 at.% Ta and less than 5 at.% Ta.

Table 5, above, summarizes the changes in mass activity, specific surface area, specific activity, and H$_2$/Air-performance (V @ 0.02 A/cm$^2$, V @ 0.32 A/cm$^2$, and J @ 0.50V) for the Comparative Example and Example 4 after the accelerated stress test. The Comparative Example lost 54% mass activity, 36% specific area, and 27% specific activity, whereas Example 3 lost 27% mass activity, 10% specific area, and 7% specific activity. The Comparative Example lost 60 and 157 mV at 0.02 and 0.32A/cm$^2$, respectively, whereas Example 3 lost 29 and 79 mV at the same current densities. The Comparative Example lost 65% of the current density at 0.50 V cell voltage, whereas Example 3 only lost 41%.

## Claims

1. A catalyst comprising nanostructured elements comprising microstructured whiskers having an outer surface at least partially covered by a catalyst material comprising Pt, Ni, and Ta,

   wherein the Pt is present in a range from 35.2 to 35.6 atomic percent, the Ni is present in a range from 62.9 to 63.6 atomic percent, and the Ta is present in a range from 0.78 to 1.8 atomic percent, and collectively the atomic percentages of Pt, Ni, and Ta add up to 100, and
   wherein the atomic percentages are determined using X-Ray Fluorescence spectroscopy (XRF).

2. The catalyst of claim 1, wherein the catalyst material comprises a layer comprising platinum and nickel and a layer comprising tantalum on the layer comprising platinum and nickel.

3. The catalyst of claim 2, wherein each layer independently has a planar equivalent thickness up to 25 nm.

4. The catalyst of claim 1, wherein the catalyst material comprises alternating layers comprising platinum and nickel and layers comprising tantalum.

5. The catalyst of claim 4, wherein each layer independently has a planar equivalent thickness up to 25 nm.

6. The catalyst of claim 1, wherein the catalyst material comprises a layer comprising platinum, a layer comprising nickel on the layer comprising platinum, and a layer comprising tantalum on the layer comprising nickel.

7. The catalyst of claim 1, wherein the catalyst material comprises a layer comprising nickel, a layer comprising platinum on the layer comprising nickel, and a layer comprising tantalum on the layer comprising platinum.

8. The catalyst of any preceding claim having an exposed tantalum surface layer.

9. The catalyst of any preceding claim, wherein the exposed tantalum surface layer is a sub-monolayer of tantalum.

10. The catalyst of any preceding claim, wherein the weight ratio of platinum to tantalum is in a range from 3:1 to 150:1.

11. The catalyst of any preceding claim, wherein the catalyst material has a thickness in a range from 0.1 to 15 nm.

12. A fuel cell membrane electrode assembly comprising the catalyst of any preceding claim.

13. A method comprising annealing the catalyst of any of claims 1 to 11.

14. A method of making the catalyst of any of claims 1 to 11, the method comprising depositing platinum and nickel from a target comprising platinum and nickel and depositing tantalum from a target comprising tantalum.

## Patentansprüche

1. Ein Katalysator, aufweisend nanostrukturierte Elemente, aufweisend mikrostrukturierte Whisker, die eine Außeno-

...berfläche haben, die mindestens teilweise durch ein Katalysatormaterial, aufweisend Pt, Ni und Ta, bedeckt ist,

> wobei das Pt in einem Bereich von 35,2 bis 35,6 Atomprozent vorhanden ist, das Ni in einem Bereich von 62,9 bis 63,6 Atomprozent vorhanden ist und das Ta in einem Bereich von 0,78 bis 1,8 Atomprozent vorhanden ist und die Atomprozente von Pt, Ni und Ta sich insgesamt auf 100 belaufen und
> wobei die Atomprozente unter Verwendung von Röntgenfluoreszenzspektroskopie (RFA) bestimmt werden.

2. Der Katalysator nach Anspruch 1, wobei das Katalysatormaterial eine Schicht, aufweisend Platin und Nickel, und eine Schicht, aufweisend Tantal, auf der Schicht, aufweisend Platin und Nickel, aufweist.

3. Der Katalysator nach Anspruch 2, wobei jede Schicht unabhängig voneinander eine planare äquivalente Dicke bis zu 25 nm hat.

4. Der Katalysator nach Anspruch 1, wobei das Katalysatormaterial abwechselnde Schichten, aufweisend Platin und Nickel, und Schichten, aufweisend Tantal, aufweist.

5. Der Katalysator nach Anspruch 4, wobei jede Schicht unabhängig voneinander eine planare äquivalente Dicke bis zu 25 nm hat.

6. Der Katalysator nach Anspruch 1, wobei das Katalysatormaterial eine Schicht, aufweisend Platin, eine Schicht, aufweisend Nickel, auf der Schicht, aufweisend Platin, und eine Schicht, aufweisend Tantal, auf der Schicht, aufweisend Nickel, aufweist.

7. Der Katalysator nach Anspruch 1, wobei das Katalysatormaterial eine Schicht, aufweisend Nickel, eine Schicht, aufweisend Platin, auf der Schicht, aufweisend Nickel, und eine Schicht, aufweisend Tantal, auf der Schicht, aufweisend Platin, aufweist.

8. Der Katalysator nach einem der vorstehenden Ansprüche, der eine freiliegende Tantaloberflächenschicht hat.

9. Der Katalysator nach einem der vorstehenden Ansprüche, wobei die freiliegende Tantaloberflächenschicht eine Untermonoschicht aus Tantal ist.

10. Der Katalysator nach einem der vorstehenden Ansprüche, wobei das Gewichtsverhältnis von Platin zu Tantal in einem Bereich von 3 : 1 bis 150 : 1 liegt.

11. Der Katalysator nach einem der vorstehenden Ansprüche, wobei das Katalysatormaterial eine Dicke in einem Bereich von 0,1 bis 15 nm hat.

12. Eine Brennstoffzellenmembranelektrodenanordnung, aufweisend den Katalysator nach einem der vorstehenden Ansprüche.

13. Ein Verfahren, aufweisend ein Tempern des Katalysators nach einem der Ansprüche 1 bis 11.

14. Ein Verfahren zum Herstellen des Katalysators nach einem der Ansprüche 1 bis 11, das Verfahren aufweisend ein Abscheiden von Platin und Nickel von einem Target, aufweisend Platin und Nickel, und das Abscheiden von Tantal von einem Target, aufweisend Tantal.


**Revendications**

1. Catalyseur comprenant des éléments nanostructurés comprenant des trichites microstructurées ayant une surface externe au moins partiellement couverte par un matériau catalyseur comprenant Pt, Ni et Ta,

> dans lequel le Pt est présent dans une plage allant de 35,2 à 35,6 pour cent atomique, le Ni est présent dans une plage allant de 62,9 à 63,6 pour cent atomique, et le Ta est présent dans une plage allant de 0,78 à 1,8 pour cent atomique, et collectivement les pourcentages atomiques de Pt, Ni, et Ta s'additionnent à 100, et
> dans lequel les pourcentages atomiques sont déterminés à l'aide d'une spectroscopie de fluorescence X (XRF).

**2.** Catalyseur selon la revendication 1, dans lequel le matériau catalyseur comprend une couche comprenant du platine et du nickel et une couche comprenant du tantale sur la couche comprenant du platine et du nickel.

**3.** Catalyseur selon la revendication 2, dans lequel chaque couche a indépendamment une épaisseur plane équivalente jusqu'à 25 nm.

**4.** Catalyseur selon la revendication 1, dans lequel le matériau catalyseur comprend une alternance de couches de platine et de nickel et de couches de tantale.

**5.** Catalyseur selon la revendication 4, dans lequel chaque couche a indépendamment une épaisseur plane équivalente jusqu'à 25 nm.

**6.** Catalyseur selon la revendication 1, dans lequel le matériau catalyseur comprend une couche comprenant du platine, une couche comprenant du nickel sur la couche comprenant du platine, et une couche comprenant du tantale sur la couche comprenant du nickel.

**7.** Catalyseur selon la revendication 1, dans lequel le matériau catalyseur comprend une couche comprenant du nickel, une couche comprenant du platine sur la couche comprenant du nickel, et une couche comprenant du tantale sur la couche comprenant du platine.

**8.** Catalyseur selon l'une quelconque revendication précédente ayant une couche superficielle de tantale exposée.

**9.** Catalyseur selon l'une quelconque revendication précédente, dans lequel la couche superficielle de tantale exposée est une sous-monocouche de tantale.

**10.** Catalyseur selon l'une quelconque revendication précédente, dans lequel le rapport pondéral du platine au tantale est dans une plage de 3:1 à 150:1.

**11.** Article selon l'une quelconque revendication précédente, dans lequel le matériau catalyseur a une épaisseur dans une plage allant de 0,1 à 15 nm.

**12.** Ensemble électrode à membrane de pile à combustible comprenant le catalyseur selon l'une quelconque revendication précédente.

**13.** Procédé comprenant le recuit du catalyseur selon l'une quelconque des revendications 1 à 11.

**14.** Procédé de fabrication du catalyseur selon l'une quelconque des revendications 1 à 11, le procédé comprenant le dépôt de platine et de nickel à partir d'une cible comprenant du platine et du nickel et le dépôt de tantale à partir d'une cible comprenant du tantale.

100

102

104

105

106

108

*FIG. 1*

217

200

e⁻    e⁻    e⁻    e⁻

e⁻                              e⁻

e⁻                              e⁻

                               $O_2$

$H_2$ →    $H^+$    $H^+$  $H^+$  $H^+$    $H^+$    ← $O_2$

            →

   201         204            207

      203            205

                        ↓

                      $H_2O$

*FIG. 2*

FIG. 3

FIG. 4

*FIG. 5*

*FIG. 6*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62652607
- US 4812352 A, Debe
- US 5039561 A, Debe
- US 5338430 A, Parsonage
- US 6136412 A, Spiewak
- US 7419741 A, Vernstrom
- US 4340276 A, Maffitt
- US 4568598 A, Bilkadi
- US 20040048466 A1, Gore
- US 5879827 A, Debe
- US 5879828 A, Debe
- US 6040077 A, Debe
- US 6319293 B, Debe
- US 20020004453 A1, Haugen
- US 7901829 B, Debe
- US 8748330 B2, Debe
- US 5759944 A, Buchanan
- US 5068161 A, Keck
- US 4447506 A, Luczak

### Non-patent literature cited in the description

- *Materials Science and Engineering,* 1992, vol. A158, 1-6
- *J. Vac. Sci. Technol. A,* July 1987, vol. 5 (4), 1914-16
- *J. Vac. Sci. Technol. A,* vol. 6 (3), 1907-11
- *Thin Solid Films,* 1990, vol. 186, 327-47
- *J. Mat. Sci.,* 1990, vol. 25, 5257-68
- Rapidly Quenched Metals. Proc. of the Fifth Int. Conf. on Rapidly Quenched Metals, Wurzburg, Germany. Elsevier Science Publishers B.V, 1985, 1117-24
- *Photo. Sci. and Eng.,* July 1980, vol. 24 (4), 211-16
- High Dispersion and Electrocatalytic Properties of Platinum on Well-Aligned Carbon Nanotube Arrays. *Carbon,* 2004, vol. 42, 191-197
- **JOHNSON et al.** *Anal. Chem.,* 2010, vol. 82, 5718-5727
- **JOHNSON et al.** *Chemistry: A European Journal,* 2010, vol. 16, 14433-14438
- **VAN DER VLIET et al.** *Nature Materials,* 2012, vol. 11, 1051-1058
- **WANG et al.** *Nature Materials,* 2013, vol. 12, 81-87